# DEMANDE DE BREVET EUROPEEN

(11) **EP 4 670 872 A1**
(43) Date de publication de la demande: **31.12.2025**
(21) Numéro de dépôt: 25185723.1
(22) Date de dépôt: 27.06.2025
(51) Int. Cl.: B22F 3/10, B22F 10/14, B22F 10/62, B22F 10/64, B33Y 40/20

(54) **PROCEDE DE DELIANTAGE D'UNE PIECE A VERT**

(30) Priorité: 28.06.2024 FR 2407030
(71) Demandeur: Association pour la Recherche et le Développement des Méthodes et Processus Industriels (ARMINES), 75272 Paris Cedex 06 (FR); J.P.B SYSTEME, 77950 Montereau-Sur-Le-Jard (FR)
(72) Inventeur: SCHNELL, Agnès, 75013 PARIS (FR); COLIN, Christophe, 91000 EVRY-COURCOURONNES (FR); MESSAGER, Denis, 77000 MELUN (FR)
(74) Mandataire: Cabinet Beau de Loménie

(57) **Abrégé**

Procédé de déliantage d'une pièce à vert dans laquelle des particules de poudre sont maintenues ensemble par un composé polymère, le procédé comprenant un traitement thermique de la pièce à vert sous une atmosphère non-oxydante, et un traitement thermochimique de la pièce à vert sous une atmosphère oxydante pendant une durée inférieure ou égale à une durée prédéterminée, le traitement thermique et le traitement thermochimique étant effectués dans une même enceinte et à des températures inférieures à la température de frittage (Tf) des particules de poudre.

## Description

### Domaine technique

Le présent exposé concerne le domaine de la fabrication additive, et plus particulièrement un procédé de fabrication additive indirecte par projection de liant sur lit de poudre. Le présent exposé vise en particulier un procédé de déliantage d'une pièce à vert. Un tel procédé de déliantage peut être utilisé, en particulier mais de manière non exclusive, pour la fabrication additive de pièces aéronautiques ou aérospatiales.

### Technique antérieure

La fabrication additive correspond à l'ensemble des techniques qui permettent de fabriquer une pièce non par enlèvement de matière, mais par ajouts successifs de matière jusqu'à créer la forme de la pièce désirée. Ces techniques présentent de nombreux avantages, parmi lesquels la capacité à fabriquer des pièces qui ne pourraient pas être fabriquées par d'autres procédés.

Il existe différents procédés de fabrication additive, tels que la fusion laser de lits de poudre (en anglais *« Laser Powder Red Fusion »,* LPBF). Récemment s'est développée la fabrication additive indirecte par projection de liant sur lits de poudre (éventuellement sur poudre métallique ou céramique, auquel cas on parle de MBJ ou CBJ - en anglais *« Metal Binder Jetting* » ou *« Ceramic BinderJetting »* respectivement), qui présente d'autres avantages industriels, tels que la possibilité de réaliser un grand nombre de pièces par impression ou de réaliser des pièces non fissurées dans des matériaux non soudables qui, dans le cas du LPBF, présenteraient de la fissuration à chaud ou à froid.

En fabrication additive indirecte par projection de liant sur lit de poudre, on forme un lit de poudre sur un support, puis on projette un liant sur une surface de ce lit de poudre correspondant à une section de la pièce à fabriquer. Ce liant sèche au moins partiellement, par exemple sous l'effet du chauffage de la surface du lit de poudre par une lampe infrarouge, puis un nouveau lit de poudre est déposé sur le lit de poudre précédent, et ainsi de suite jusqu'à reconstituer l'intégralité de la forme de la pièce à fabriquer. Ensuite, le liant est réticulé en un polymère solide afin d'assurer à la pièce, qui est alors dite pièce réticulée ou « pièce à vert », une tenue mécanique suffisante pour résister au dépoudrage, opération visant à retirer la poudre excédentaire de la pièce non liée par du polymère. Après dépoudrage, la pièce à vert est déliantée (le polymère en est retiré) puis frittée, ce qui permet d'obtenir la pièce finale.

Des essais comparatifs ont toutefois permis de constater que la santé matière de pièces obtenues par fabrication additive indirecte par projection de liant sur lit de poudre n'était pas aussi bonne que la santé matière de pièces similaires obtenues par simple frittage à partir de la même poudre, caractérisée par une certaine composition chimique et une certaine distribution en taille de particules. L'invention vise au moins à remédier en partie à ces inconvénients.

### Exposé de l'invention

Dans cette perspective, les inventeurs ont observé que la seule différence entre un frittage classique et un procédé de fabrication additive indirecte était que les particules de poudre n'étaient pas en contact avec le liant, et que les pièces frittées issues du procédé de fabrication additive indirecte pouvaient, selon les conditions de déliantage, présenter soit une porosité importante liée à l'adsorption d'oxygène à la surface des particules lors du déliantage et qui engendre lors du cycle de frittage des PPB (de l'anglais *« Prior Particle Boundaries »,* surfaces des particules d'origine) d'oxydes à la surface des particules, soit, lorsque le déliantage est effectué sous atmosphère non oxydante, de gros carbures qui se forment lors du frittage et qui impactent significativement la dureté de la pièce frittée.

Il existe donc un besoin pour un nouveau procédé de déliantage.

A cet effet, le présent exposé concerne un procédé de déliantage d'une pièce à vert (ou pièce réticulée) dans laquelle des particules de poudre sont maintenues ensemble par un composé polymère, le procédé comprenant un traitement thermique de la pièce à vert sous une atmosphère non-oxydante, et un traitement thermochimique de la pièce à vert sous une atmosphère oxydante pendant une durée inférieure ou égale à une durée prédéterminée, le traitement thermique et le traitement thermochimique étant effectués dans une même enceinte et à des températures inférieures à la température de frittage des particules de poudre.

Les particules de poudre peuvent être des particules métalliques ou d'alliages métalliques, par exemple des particules d'un superalliage à base nickel tel que l'Inconel 718 (marque déposée) ou d'un acier inoxydable. Selon d'autres modes de réalisation, les particules de poudre peuvent être des particules intermétalliques ou céramiques non-oxydes, tels que les nitrures, carbures, etc. Le composé polymère est le composé qui résulte de la réticulation du liant après séchage ; ce composé peut comprendre voire consister, en majorité ou en totalité, en un ou plusieurs polymères.

Le traitement thermique et le traitement thermochimique sont effectués à des températures inférieures à la température de frittage des particules de poudre, c'est-à-dire à des températures inférieures à la température à laquelle les particules de poudre, toutes conditions égales par ailleurs, sont susceptibles de fritter les unes avec les autres. Le procédé de déliantage concerne donc bien le déliantage stricto sensu, à l'exclusion du frittage.

Le traitement thermique comprend au moins une variation de température par rapport à la température initiale de la pièce à vert (par exemple la température ambiante), par exemple au moins une hausse et/ou au moins une baisse de température, et/ou un maintien de la pièce à vert à une température différente de la température ambiante. Ce programme de température est mis en œuvre sous une atmosphère non-oxydante, c'est-à-dire un gaz ou un mélange de gaz ne comprenant nominalement aucun composé oxydant tel que le dioxygène, indépendamment des composés pouvant être relargués dans cette atmosphère du fait de la dégradation des chaînes du composé polymère. Ainsi, le traitement thermique sous une atmosphère non-oxydante permet de dégrader les chaînes du composé polymère sans que l'atmosphère n'apporte d'oxygène à adsorber à la surface des particules. Toutefois, un traitement thermique seul n'est généralement pas suffisant pour dégrader le composé polymère dans son intégralité : il en reste des résidus carbonés qui tendent à précipiter avec les éléments carburigènes du matériau lors du frittage.

Le traitement thermochimique comprend au moins une variation de température par rapport à la température initiale de la pièce à vert (par exemple la température ambiante), par exemple au moins une hausse et/ou au moins une baisse de température, et/ou un maintien de la pièce à vert à une température différente de la température ambiante (par exemple tout au plus la température de fin du traitement thermique). Le traitement thermochimique est réalisé dans des conditions permettant de coupler au programme de température une réaction chimique du composé polymère, notamment une combustion du carbone ou de chaînes carbonées sous atmosphère oxydante, afin de poursuivre l'élimination du composé polymère. On évite ainsi la présence de résidus carbonés dans la pièce déliantée, qui nuiraient sinon aux propriétés mécaniques de la pièce après frittage. Une atmosphère oxydante désigne un gaz ou un mélange de gaz comprenant nominalement au moins un composé oxydant, tel que le dioxygène, indépendamment des composés pouvant être relargués dans cette atmosphère du fait de la dégradation des chaînes du composé polymère.

Le programme de température suivi lors du traitement thermique peut être différent du programme de température suivi lors du traitement thermochimique.

Grâce au fait que le traitement thermochimique est effectué pendant une durée inférieure ou égale à une durée prédéterminée, le traitement thermochimique est suffisamment court pour permettre de traiter le composé polymère sans générer d'oxydation excessive des particules de poudre, ce qui limiterait aussi la densification lors du frittage. La durée prédéterminée peut être par exemple de 1 heure, de préférence de 30 minutes, de préférence de 5 minutes, voire encore de préférence 3 minutes.

De plus, le traitement thermique et le traitement thermochimique sont effectués dans une même enceinte. L'enceinte peut être un four ou analogue, ou tout dispositif permettant d'appliquer à la pièce un programme de température tout en contrôlant l'atmosphère qui y règne et sa pression. Grâce à ces dispositions, la pièce à vert ne sort pas de l'enceinte entre le traitement thermique et le traitement thermochimique. Cela évite une reprise d'humidité de la pièce ainsi qu'une manipulation de la pièce partiellement déliantée qui est à ce stade très fragile, et permet optionnellement de prévoir une continuité de température entre le traitement thermique et le traitement thermochimique (typiquement, éviter un refroidissement subi de la pièce), ce qui augmente la maîtrise du procédé et accélère le procédé de déliantage.

Ensemble, ces dispositions assurent une disparition efficace du composé polymère tout en limitant l'oxydation à la surface des particules. Par conséquent, il n'y a ni précipitation de carbures lors du frittage, ni formation de larges oxydes qui entourent les particules de poudre et gênent également la densification lors du frittage, en faisant obstacle (barrière de diffusion) à la formation de cous de matière entre particules. Le présent procédé de déliantage permet donc d'obtenir une bonne densification lors du frittage et, *in fine,* une bonne santé matière de la pièce frittée et de bonnes propriétés mécaniques, notamment de dureté.

Dans certains modes de réalisation, le traitement thermique précède le traitement thermochimique. Cela permet de dégrader le composé polymère (rupture de chaînes carbonées) avant de le faire réagir chimiquement. La réaction chimique du traitement thermochimique est donc plus efficace. Dans d'autres modes de réalisation, le traitement thermique est réalisé après le traitement thermochimique.

Dans certains modes de réalisation, le traitement thermique comprend l'application d'une température croissante à la pièce à vert, par exemple selon une rampe. Une rampe de température désigne une variation linéaire de la température. La température ainsi commandée (température programmée ou température de consigne) peut être la température au sein de l'enceinte, par exemple en un point de référence, idéalement situé au voisinage de la pièce à vert, aussi près que possible de celle-ci. Un thermocouple ou autre capteur de température peut être placé au point de référence. Par exemple, une vitesse de rampe peut être comprise entre 1°C/min et 10°C/min et de préférence entre 5°C/min et 10°C/min. Selon d'autres exemples, la vitesse de croissance de la température peut être supérieure ou égale à 5°C/min, de préférence à 6°C/min, de préférence à 7°C/min, de préférence à 8°C/min, de préférence à 9°C/min, de préférence à 10°C/min, de préférence encore à 12°C/min. Une croissance rapide de la température permet non seulement d'accélérer le procédé de déliantage, ce qui est intéressant sur le plan industriel, mais aussi de limiter la durée pendant laquelle la pièce à vert est en présence d'oxygène libéré par la rupture de certaines chaînes du composé polymère. Ce faisant, l'adsorption d'oxygène à la surface des particules de poudre est encore mieux maîtrisée. En complément ou en remplacement de la rampe, le traitement thermique peut comprendre l'application d'un palier de température à la pièce à vert. Un palier de température désigne un maintien de la température constante, à une certaine tolérance près.

Dans certains modes de réalisation, le traitement thermochimique comprend l'application d'un palier de température à la pièce à vert. En complément ou en remplacement du palier, le traitement thermochimique peut comprendre l'application d'une rampe de température à la pièce à vert.

Dans certains modes de réalisation, la température de fin du traitement thermique est inférieure ou égale à la température de début du traitement thermochimique.

Dans certains modes de réalisation, les atmosphères du traitement thermique et du traitement thermochimique peuvent avoir tout ou partie des caractéristiques suivantes, indépendamment l'une de l'autre :
- l'atmosphère non-oxydante est une atmosphère d'argon ou d'argon hydrogéné, ou encore de dihydrogène ou d'hélium, ou encore un vide secondaire ;
- l'atmosphère oxydante est une atmosphère d'air, notamment d'air sec, par exemple d'air synthétique (80% N₂ et 20% O₂) ;
- l'atmosphère oxydante comprend un mélange de dioxygène avec un gaz neutre ;
- l'atmosphère non-oxydante est renouvelée au cours du traitement thermique ;
- l'atmosphère oxydante est renouvelée au cours du traitement thermochimique.

Une atmosphère renouvelée désigne une atmosphère qui est extraite de l'enceinte pour être traitée et rendue plus proche de sa composition nominale (éventuellement sa composition d'origine) avant d'être réinjectée dans l'enceinte. Le fait de renouveler une atmosphère permet un meilleur contrôle des réactions chimiques dans l'enceinte.

Dans certains modes de réalisation, la durée prédéterminée est inférieure ou égale à la durée du traitement thermique. Ainsi, le traitement thermochimique est plus court que le traitement thermique. Cela limite encore l'oxydation indésirable de la pièce en cours de déliantage.

Dans certains modes de réalisation, le polymère est un polymère organique, par exemple thermoplastique ou thermodurcissable.

Dans certains modes de réalisation, la durée prédéterminée est la durée la plus courte permettant de réduire le taux de carbone de la pièce déliantée, mesuré par spectrométrie de masse à plasma à couplage inductif, à une valeur inférieure à 1000 ppm, de préférence inférieure à 600 ppm, de préférence encore à 400 ppm, de préférence encore à 200 ppm. Ce taux peut être le taux additionnel de carbone de la pièce déliantée par rapport à la composition d'origine des particules de poudre, ou le taux global de carbone de la pièce déliantée, tenant compte de la composition d'origine des particules de poudre. La spectrométrie de masse à plasma à couplage inductif, appelée également ICP-MS (de l'anglais *« Inductively Coupled Plasma Mass Spectrometry»),* est une méthode physique d'analyse chimique connue en tant que telle et permettant de doser la quasi-totalité des éléments chimiques simultanément. Grâce au fait que la durée prédéterminée est ainsi définie, le traitement thermochimique peut être relativement rapide et offre un bon compromis entre la disparition du composé polymère et l'absence d'oxygène adsorbé à la surface des particules de la pièce déliantée.

Alternativement ou en complément, la durée prédéterminée est définie de sorte que la teneur en oxygène acquise par la pièce déliantée pendant le procédé de déliantage, par rapport à la composition d'origine des particules de poudre, soit inférieure ou égale à 2800 ppm, de préférence inférieure à 2400 ppm. Cet oxygène acquis peut provenir de l'atmosphère oxydante mais aussi de la dégradation du composé polymère, plus précisément l'oxygène libéré par la rupture de certaines chaînes du composé polymère, à l'exclusion de l'oxygène contenu dès l'origine dans les particules de poudre.

Le présent exposé concerne également un procédé de fabrication additive indirecte, comprenant l'obtention d'une pièce à vert dans laquelle des particules de poudre sont maintenues ensemble par un composé polymère, le déliantage de la pièce à vert par le procédé de déliantage précédemment décrit, et le frittage de la pièce déliantée. Grâce au déliantage proposé, ce procédé de fabrication permet d'obtenir des pièces frittées ayant une bonne santé matière et de bonnes propriétés mécaniques, notamment de dureté.

Dans certains modes de réalisation, le frittage suit immédiatement le déliantage. Cela permet de bénéficier de la mise en température par le traitement thermique ou thermochimique pour amorcer le frittage, ce qui est très efficace sur le plan industriel. En outre, le frittage peut avoir lieu dans la même enceinte que le déliantage pour éviter de nouvelles manipulations et contaminations de la pièce déliantée.

Le présent exposé vise également une pièce obtenue par le procédé de fabrication additive indirecte précédemment décrit, dans laquelle la fraction massique d'oxygène mesurée par spectrométrie de masse à plasma à couplage inductif est inférieure à 0,41%, de préférence 0,35%, de préférence 0,1%, de préférence 0,06%, et/ou la fraction massique de carbone mesurée par spectrométrie de masse à plasma à couplage inductif est inférieure à 0,11%, de préférence 0,08%, et/ou la porosité est inférieure à 2%. La pièce, ayant subi un frittage, peut aussi être appelée « pièce frittée » par opposition à la pièce dans des états antérieurs au frittage. Les taux d'oxygène, de carbone et/ou la porosité sont tels qu'une telle pièce a nécessairement été déliantée par le procédé de déliantage maîtrisé tel que proposé dans le présent exposé.

### Brève description des dessins

D'autres caractéristiques et avantages de l'objet du présent exposé ressortiront de la description suivante de modes de réalisation, donnés à titre d'exemples non limitatifs, en référence aux figures annexées.
La figure 1 illustre schématiquement les étapes d'un procédé de fabrication additive indirecte par projection de liant sur lit de poudre selon un mode de réalisation.
La figure 2 est un graphe illustrant, pas nécessairement à l'échelle, la variation de température d'une enceinte en fonction du temps pour un procédé de déliantage selon un premier mode de réalisation.
La figure 3 est un graphe illustrant la perte de masse d'une pièce à vert en fonction du temps pendant le procédé de déliantage selon le premier mode de réalisation et selon un exemple comparatif ainsi que la prise de masse mesurée sur la poudre, aussi appelé blanc, selon le premier mode de réalisation.
La figure 4 est un graphe illustrant, pas nécessairement à l'échelle, la variation de température d'une enceinte en fonction du temps pour un procédé de déliantage selon un second mode de réalisation.

### Description détaillée

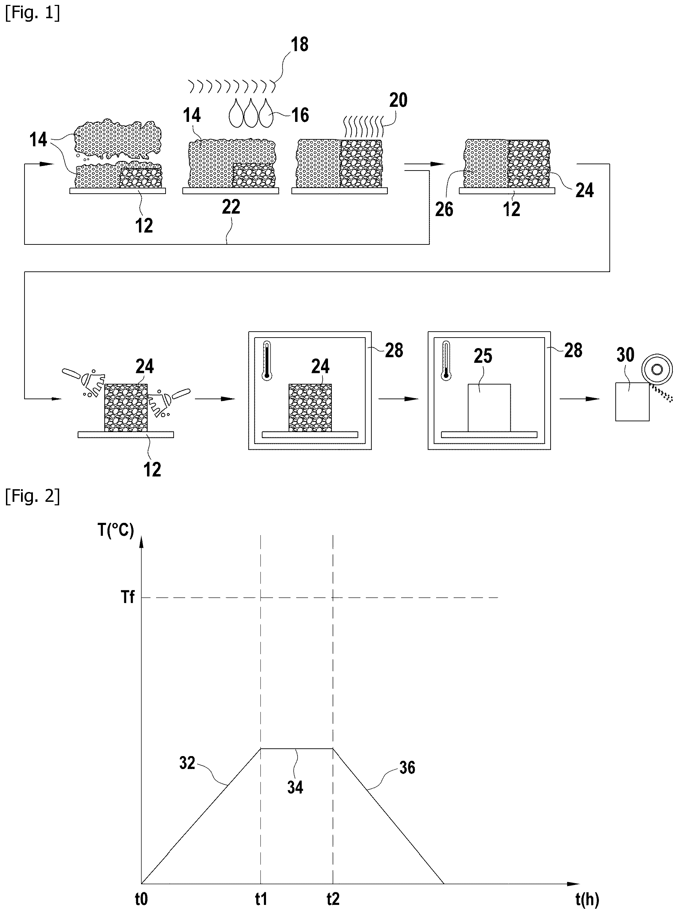

Le principe d'un procédé de fabrication additive indirecte par projection de liant sur lit de poudre est illustré sur la figure 1. Le procédé comprend la formation de lits de poudre 14 successifs sur un support 12. Chaque lit de poudre 14 est formé sur le lit de poudre précédent, sauf le premier lit de poudre qui peut être en contact direct avec le support 12.

La poudre peut être une poudre métallique, par exemple un alliage de Fer-Nickel tel que l'Inconel 718 (marque déposée, dont la composition est détaillée au tableau 1, à l'exception des impuretés inévitables) ou plus généralement un superalliage à base nickel. Toutefois, d'autres matériaux peuvent être envisagés, tels que l'acier inoxydable comme l'acier SS316L (dont la composition est détaillée au tableau 2, à l'exception des impuretés inévitables). Sauf indication contraire, dans le présent exposé, les fractions mentionnées sont des fractions massiques.

**[Tableau 1]**

| **Eléments** | **C** | **Mn** | **P** | **S** | **Si** | **Cr** | **Ni** | **Mo** | **O** |
|---|---|---|---|---|---|---|---|---|---|
| Min (%masse) | 0,02 | - | - | - | - | 17 | 50 | 2,8 | - |
| Max (%masse) | 0,08 | 0,35 | 0,015 | 0,015 | 0,35 | 21 | 55 | 3,3 | 0,06 |

| **Eléments** | **B** | **Ti** | **Ta** | **Nb** | **Cu** | **Co** | **Al** | **Fe** | |
|---|---|---|---|---|---|---|---|---|---|
| Min (%masse) | - | 0,6 | - | 4,75 | - | - | 0,2 | - | |
| Max (%masse) | 0,006 | 1,2 | 0,05 | 5,50 | 0,3 | 1 | 0,8 | Compl ément | |

**[Tableau 2]**

| **Eléments** | **C** | **Mn** | **P** | **S** | **Si** | **Cr** | **Ni** | **Mo** |
|---|---|---|---|---|---|---|---|---|
| Min (%masse) | - | - | - | - | - | 16 | 9 | 1,5 |
| Max (%masse) | <0,03 | <2 | <0,01 | <0,005 | 1 | 19 | 13 | 3 |

| **Eléments** | **N** | **O** | **Fe** | | | | | |
|---|---|---|---|---|---|---|---|---|
| Min (%masse) | - | - | - | | | | | |
| Max (%masse) | <0,003 | <0,002 | Complément | | | | | |

Dans les exemples ci-dessus, on note les faibles teneurs en oxygène et en carbone. De manière générale, le matériau de la poudre peut être sélectionné avec les teneurs en oxygène et/ou en carbone les plus basses possibles pour limiter l'adsorption d'oxygène et la formation de carbures au cours du procédé de fabrication additive. Typiquement, la teneur initiale en oxygène de la poudre utilisée peut être limitée en utilisant des procédés d'atomisation utilisant par exemple la technologie de l'électrode tournante avec fusion au moyen d'une torche plasma (PREP, de l'anglais *« Plasma Rotating Electrode Process »).* Par exemple, la teneur en oxygène des particules de poudre peut être inférieure à 500 ppm, voire inférieure à 150 ppm et de préférence à 50 ppm.

Le procédé comprend également la projection sélective de liant sur chacun des lits de poudre 14. Ainsi, après formation d'un lit de poudre, un liant 16 est projeté sur ce lit de poudre 14, avant la formation d'un lit de poudre 14 suivant. Le liant 16 peut être projeté par une tête d'impression 18, par exemple sous forme de gouttes. La projection est dite sélective dans la mesure où la projection de liant 16 peut n'être pas faite sur tout le lit de poudre 14, mais uniquement sur une surface qu'on souhaite imprimer et qui correspond à une coupe de la pièce à fabriquer. Une telle surface peut être définie dans un fichier CAO (conception assistée par ordinateur).

Le liant 16 peut comprendre un ou plusieurs solvants et un ou plusieurs polymères en solution dans l'ensemble de ces solvants. Typiquement, le polymère peut être un polymère organique, par exemple thermoplastique ou thermodurcissable. Par exemple, le liant peut être un mélange d'eau, d'éthylène glycol et de 2-butoxyéthanol (3 solvants) avec du polyvinylpyrrolidone (1 polymère).

Le liant 16 s'infiltre dans le lit de poudre 14 et peut ensuite subir un séchage 20 naturel (à température ambiante, typiquement) ou forcé (séchage activé par une source de chaleur telle qu'une lampe à infrarouge), au cours duquel le liant, et notamment ses solvants, s'évapore en partie. Par exemple, la température de séchage peut être comprise entre 25°C et 70°C. Il est possible d'observer un temps de pause, par exemple de l'ordre de plusieurs secondes, entre l'infiltration du liant 16 et le début du séchage.

Comme schématisé par la flèche 22, ces étapes peuvent être répétées, un nouveau lit de poudre 14 étant déposé sur le lit de poudre qui a précédemment reçu du liant, jusqu'à ce que la forme de la pièce à fabriquer, ainsi construite couche par couche, soit entièrement imprimée.

Après l'impression de la pièce couche par couche, une étape de réticulation permet de finir de sécher le liant (typiquement, finir d'évaporer les solvants) et de polymériser le ou les polymère(s). Par souci de concision, on parle de composé polymère pour désigner le composé, constitué majoritairement ou en totalité d'un ou de plusieurs polymère(s) réticulé(s), qui assure la cohésion des particules de poudre. Il en résulte une pièce à vert 24 généralement monobloc, le reste de la poudre non imprimée 26 restant quant à lui à l'état granulaire. Par exemple, la réticulation peut être effectuée à une température de 200°C pendant 12h, sous air. A l'issue de la réticulation, la pièce à vert 24 doit présenter une résistance à la rupture suffisamment élevée pour supporter les étapes suivantes. Par exemple, pour résister aux manipulations nécessaires au dépoudrage, il est préférable que la pièce à vert 24 ait une contrainte à rupture équivalente en flexion quatre points (essai standard) supérieure ou égale à 5, 6 ou 7 MPa, voire à 20, 21 ou 22 MPa pour des pièces ouvragées, sans quoi la pièce à vert 24 a de fortes chances de se détériorer lors du dépoudrage. L'expression « contrainte à rupture équivalente » est utilisée car la formule de calcul de la contrainte pour cet essai s'applique à des matériaux denses, ce qui n'est pas le cas des pièces à vert. A titre d'exemple, après réticulation, le composé polymère peut comprendre entre 50 et 60% de carbone et entre 20 et 30% d'oxygène, les constituants complémentaires pouvant comprendre typiquement l'azote et l'hydrogène.

La pièce à vert 24 subit ensuite un dépoudrage, qui peut être effectué de manière connue en soi, consistant à retirer de la pièce à vert 24 les restes de poudre 26 non imprimés. Par exemple, le dépoudrage peut être réalisé à l'aide d'une buse d'air comprimé (typiquement avec une pression maximale de 2 bar).

La pièce à vert 24 peut comprendre, en volume, entre 30% et 70% de poudre, de préférence entre 40% et 60%, de préférence environ 50% ; moins de 10% de composé polymère, par exemple entre 0.5% et 5% ; le reste du volume de la pièce à vert 24 étant formé de pores. Du fait de la fabrication additive indirecte par projection de liant sur lit de poudre, la porosité peut représenter une fraction volumique de la pièce à vert 24 d'au moins 20%, de préférence au moins 30%, de préférence au moins 40%.

Ensuite, la pièce à vert 24 est déliantée puis frittée. Comme illustré sur la figure 1, le déliantage peut être effectué en plaçant la pièce à vert 24 dans une enceinte 28. Le déliantage peut comprendre un ou plusieurs traitements thermiques et traitements thermochimiques de la pièce à vert 24 à une température plus élevée que la température de réticulation du liant, comme il sera détaillé par la suite.

Après déliantage, la pièce dite pièce brune 25 (ou encore pièce déliantée) peut être frittée, dans la même enceinte 28 ou une enceinte différente. Par exemple, le frittage peut être effectué à une température inférieure au solidus, par exemple de l'ordre de 1220°C pour l'Inconel 718 (marque déposée) dont le solidus est de 1260 °C, ou à une température légèrement supérieure mais demeurant en tout état de cause inférieure à la température de liquidus. L'atmosphère dans l'enceinte 28 peut être un vide secondaire (pression inférieure à 10⁻⁵ mbar) ou de l'argon additionné de 5% volumique de dihydrogène ou encore du dihydrogène pur ou encore une atmosphère d'hélium. Des pièges à oxygène (getter) peuvent être présents dans l'enceinte 28, par exemple un alliage très avide d'oxygène, notamment un alliage à base de titane tel que le TA6V.

Le frittage permet d'effectuer une densification de la pièce brune 25 pour obtenir la pièce finale 30. La pièce finale 30 peut ensuite refroidir, par exemple dans l'enceinte 28 ou en dehors. Si nécessaire, la pièce finale 30 peut enfin être parachevée, comme le montre la dernière étape de la figure 1.

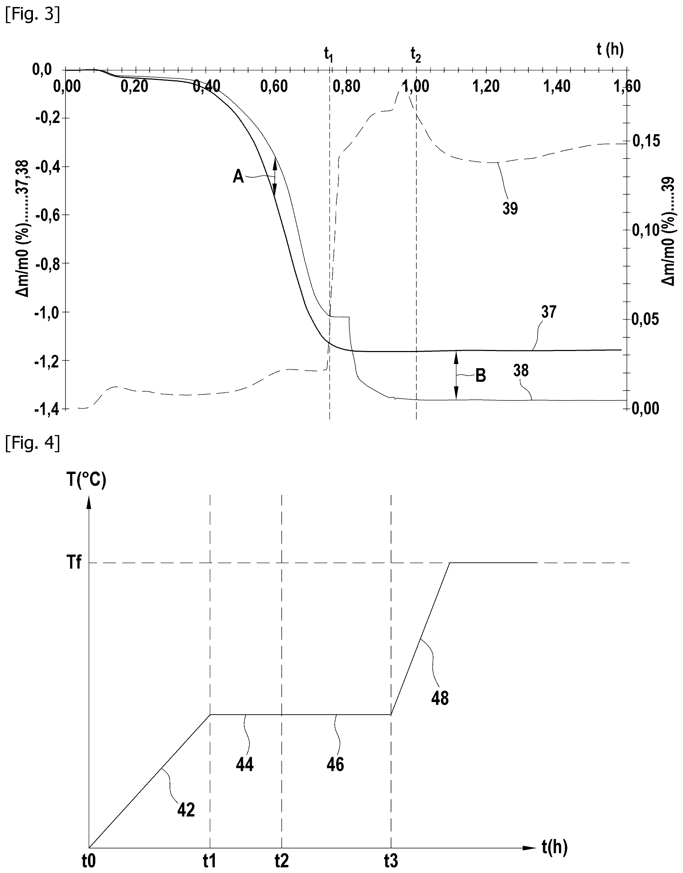

Un premier mode de réalisation d'un procédé de déliantage est décrit en référence aux figures 2 et 3. Sans perte de généralité, on décrit par la suite le procédé de déliantage appliqué à une pièce à vert en Inconel 718 (marque déposée), mais les principes décrits ci-après se transposent à d'autres matériaux. Comme décrit précédemment, la pièce à vert 24 est telle que les particules de poudre sont maintenues ensemble par le composé polymère réticulé.

Dans le premier mode de réalisation, le procédé de déliantage comprend un traitement thermique de la pièce à vert 24 sous une atmosphère non-oxydante, dans l'enceinte 28, à des températures inférieures à la température de frittage Tf des particules de poudre qui elle-même est inférieure à la température de solidus Ts de l'alliage, dans cet exemple. La variation de température appliquée à la pièce à vert peut comprendre l'application d'une température croissante, par exemple selon une rampe de température 32. Toutefois, l'augmentation de température pourrait être non linéaire, ou entrecoupée de paliers de température. La pente de la rampe est par exemple comprise entre 1°C/min et 10°C/min, de préférence entre 5°C/min et 10°C/min, de préférence environ 10°C/min.

En l'espèce, le traitement thermique débute à un instant t0 et dure jusqu'à un instant t1. Pendant cette durée, qui peut aller de 30 min à 7 heures, de préférence entre 40 min et 1h, de préférence encore environ 45min, l'atmosphère dans l'enceinte est non-oxydante, notamment dépourvue d'oxygène. Par exemple, l'atmosphère non-oxydante peut être une atmosphère d'argon ou d'argon hydrogéné voire même d'hélium ou encore d'un vide primaire ou secondaire. Afin de préserver ses caractéristiques, l'atmosphère non-oxydante peut être renouvelée périodiquement ou en continu au cours du traitement thermique. Un débit de renouvellement de l'atmosphère non-oxydante peut être compris entre 1 L/h et 30 L/h, de préférence entre 2 L/h et 10 L/h, de préférence encore entre 3 L/h et 5 L/h.

Le procédé de déliantage comprend également, de préférence après le traitement thermique, un traitement thermochimique de la pièce à vert 24 dans la même enceinte 28, à des températures inférieures à la température de frittage Tf des particules de poudre. La pièce à vert 24 reste avantageusement dans l'enceinte 28 entre le traitement thermique et le traitement thermochimique.

Le traitement thermochimique est effectué sous une atmosphère oxydante, c'est-à-dire comportant de l'oxygène sous une forme apte à réagir avec la pièce à vert 24, en particulier avec le composé polymère. Par exemple, l'atmosphère oxydante peut être une atmosphère d'air sec, par exemple d'air synthétique, ou comprendre un mélange d'oxygène avec un gaz neutre (typiquement l'argon ou l'azote), typiquement présentant un mélange à 80% d'azote et 20% d'oxygène (fractions volumiques). La teneur en oxygène peut toutefois être modifiée, par exemple être comprise entre 10% et 25% (fractions volumiques). Afin de préserver ses caractéristiques, l'atmosphère oxydante peut être renouvelée périodiquement ou en continu au cours du traitement thermique. Un débit de renouvellement de l'atmosphère oxydante peut être compris entre 1 L/h et 30 L/h, de préférence entre 2 L/h et 10 L/h, de préférence encore entre 3 L/h et 5 L/h.

Le traitement thermochimique est appliqué à la pièce à vert pendant une durée inférieure ou égale à une durée prédéterminée, afin d'autoriser la réaction chimique du composé polymère avec l'oxygène de l'atmosphère sans entraîner d'oxydation ou d'adsorption excessive d'oxygène à la surface des particules de poudre. Selon un exemple, la durée prédéterminée est inférieure ou égale à la durée du traitement thermique ; en d'autres termes, le traitement thermochimique est plus court ou de même durée que le traitement thermique.

Sur la figure 2, on a illustré le programme de température appliqué pendant le traitement thermochimique comme un palier de température 34 à une température supérieure à la température ambiante. Plus précisément, la température de début du traitement thermochimique peut être supérieure ou égale à la température de fin du traitement thermique ; en l'espèce, on observe même une continuité de température entre la fin du traitement thermique et le début du traitement thermochimique. La température du traitement thermochimique est typiquement comprise entre 430°C et 490°C, de préférence entre 460°C et 480°C, de préférence environ 470°C.

En alternative ou en complément du palier de température 34, le traitement thermochimique pourrait comprendre une rampe de température, d'une pente supérieure, inférieure ou égale à celle du traitement thermique, ou tout autre programme de température permettant la disparition du composé polymère par voie thermochimique.

Sur la figure 2, le traitement thermochimique débute à l'instant t1 et dure jusqu'à un instant t2. La durée t2-t1 du traitement thermochimique peut être comprise entre 3 minutes et 1 heure, de préférence entre 4 et 10 minutes, de préférence environ 5min. Comme indiqué précédemment, la durée t2-t1 du traitement thermochimique peut être inférieure ou égale à la durée t1-t0 du traitement thermique. Au total, le procédé de déliantage proposé peut avoir une durée t2-t0 d'une heure ou moins.

Pendant le procédé de déliantage, par exemple pendant le traitement thermique et/ou le traitement thermochimique, il est possible de placer dans l'enceinte du carbone solide afin de réduire l'oxygène adsorbé en surface des particules de poudre métallique. Le carbone solide peut être placé au contact de la pièce à vert 24. Le carbone solide peut être constitué à plus de 90%, voire 95%, de l'élément chimique carbone. Le carbone solide peut être prévu sous forme de poudre (carbone solide pulvérulent). Dans ce cas, les particules de poudre de carbone solide peuvent avoir une taille nanométrique, c'est-à-dire que leur plus grande dimension est comprise entre 10 et 100 nanomètres. La taille des particules de poudre peut être mesurée par diffusion dynamique de la lumière *(Dynamic Light Scattering ou* DLS) ou microscopie électronique, typiquement à transmission (MET) ou à balayage (MEB). Ce carbone solide à grande surface spécifique peut capter, à partir d'une certaine température (en particulier à la température où le déliantage se produit), l'oxygène présent dans l'enceinte lors du déliantage.

Après le traitement thermochimique, la pièce à vert 24 peut être refroidie. Cela est illustré par une rampe de température 36 décroissante sur la figure 2, à partir de l'instant t2 de fin du traitement thermochimique. Bien qu'elle soit ici représentée comme linéaire, la baisse de température pourrait être non linéaire, ou entrecoupée de paliers de température. La pièce à vert 24 peut être ramenée à la température ambiante avant de poursuivre le procédé de fabrication additive indirecte. On obtient à ce stade, avant l'étape du frittage, une pièce dite déliantée ou pièce brune 25.

La figure 3 illustre la perte de masse relative Δm/m0 (en %, axe à gauche de la figure) par rapport à la masse initiale de la pièce à vert 24 en fonction du temps au cours du procédé de déliantage selon un exemple comparatif (courbe 37) et selon le premier mode de réalisation (courbe 38). Les courbes 37, 38 ont été obtenues pour des pièces à vert similaires mais distinctes.

Comme il ressort de la figure 3, la masse de la pièce à vert 24 diminue pendant le traitement thermique, entre t0 et t1, ce qui correspond à la pyrolyse du composé polymère, et ce aussi bien pour le premier mode de réalisation (courbe 38) que pour l'exemple comparatif (courbe 37). A l'approche de la fin du traitement thermique, la perte de masse peut ralentir. Un écart de perte de masse, noté A sur la figure 3, peut apparaître entre les pièces car ces pièces peuvent comprendre des quantités de composé polymère légèrement différentes en raison de l'étape de mise en couche (gradient de compacité du lit de poudre) et de l'étape d'impression, qui engendrent une infiltration hétérogène du liant au sein du lit de poudre, d'où des quantités différentes de composé polymère à dégrader lors du déliantage.

A l'instant t1, le traitement thermique de l'exemple comparatif (courbe 37) se poursuit sous la même atmosphère, jusqu'à la fin du procédé de déliantage, et ne permet pas de diminuer davantage la masse de la pièce à vert 24, tandis que le traitement thermique du premier mode de réalisation (courbe 38) laisse place au traitement thermochimique qui lui succède immédiatement et qui entraîne une nouvelle perte de masse franche. Autour de l'instant t1 (sur la figure 3 : immédiatement après t1), une petite latence peut être observée en raison de la purge de l'atmosphère non-oxydante pour la remplacer par l'atmosphère oxydante. Cette deuxième phase de perte de masse, qui contribue également à l'écart final B par rapport à l'exemple comparatif (courbe 37), est liée à la réaction chimique du composé polymère durant le traitement thermochimique, réaction dont les produits sont majoritairement libérés vers l'atmosphère. La perte de masse peut ensuite ralentir lorsque l'essentiel du composé polymère a été retiré de la pièce à vert 24. A ce stade, le taux de carbone de la pièce à vert 24, mesuré par spectrométrie de masse à plasma à couplage inductif, est de préférence inférieur à 1000 ppm, de préférence à 600 ppm, de préférence encore à 400 ppm, de préférence encore à 200 ppm.

En réalité, la pièce à vert 24, en cours de déliantage, subit une légère prise de masse en raison de la captation d'oxygène de l'atmosphère oxydante par la pièce à vert 24. La prise de masse mesurée sur la poudre seule en l'absence du composé polymère, parfois appelée « blanc » et illustrée par la courbe 39 sur la figure 3 (axe de droite), a été quantifiée à part et soustraite de la courbe 38 de la figure 3. Ainsi, la courbe 39 de la figure 3 ne représente que la prise de masse liée à l'atmosphère environnante et non à l'oxygène provenant de la dégradation du composé polymère car le « blanc » est mesuré sur de la poudre en l'absence de composé polymère. Comme il ressort de la courbe 39, la prise de masse en l'absence de polymère est inférieure à 200 ppm lors du traitement thermique, donc très limitée. Cette dernière est évaluée par analyse thermogravimétrique et des mesures ICP complémentaires en oxygène et si nécessaire en carbone.

Idéalement, le traitement thermochimique est interrompu avant que l'oxydation et l'adsorption d'oxygène ne deviennent excessives, par exemple en remplaçant l'atmosphère oxydante par une atmosphère non oxydante tel qu'un vide au niveau désiré. La durée prédéterminée, qui borne supérieurement la durée du traitement thermochimique, peut être inférieure ou égale à la durée nécessaire à l'obtention des taux de carbone précités. Grâce à ces dispositions, le gain de masse en oxygène, par rapport à la composition d'origine des particules de poudre, peut être limité à une valeur inférieure ou égale à 2800 ppm, de préférence 2400 ppm. En outre, dans la mesure où l'oxygène présent dans le composé polymère contribue significativement à la contamination des particules de poudre lors du déliantage, il est avantageux de minimiser la teneur en oxygène du composé polymère, par exemple en utilisant un liant avec un monomère appauvri en atome d'oxygène. Plus généralement, le gain de masse en oxygène peut encore être réduit en sélectionnant un liant dont le composé polymère est peu susceptible de libérer de l'oxygène au cours du déliantage, et/ou en limitant la saturation en liant (quantité de liant, fonction notamment du nombre de passes de la tête d'impression par lit de poudre) de la pièce lors de l'étape d'impression.

La pièce frittée 30 obtenue sur la base de la pièce à vert ainsi déliantée possède une bonne santé matière et de bonnes propriétés mécaniques : d'une part, le peu d'oxygène capté par la poudre après déliantage entraîne une bonne densité et un frittage efficace grâce à la formation rapide de cous de matière. D'autre part, la très faible quantité de résidus carbonés évite de former des carbures riches en niobium ou en titane lors du frittage, ce qui permet au niobium, typiquement, de participer à la précipitation de la phase durcissante γ" - Ni₃Nb qui contribue significativement à la dureté du matériau.

La pièce frittée 30 ainsi obtenue est telle que la fraction massique d'oxygène mesurée par spectrométrie de masse à plasma à couplage inductif est inférieure à 0,41%, de préférence 0,35%, de préférence 0,1%, de préférence 0,06%. Par ailleurs, la fraction massique de carbone mesurée par spectrométrie de masse à plasma à couplage inductif est inférieure à 0,11%, de préférence 0,08%. Par ailleurs, la porosité est inférieure à 2% (la porosité étant toujours exprimée en fraction volumique, par définition).

Par exemple, une pièce en Inconel 718 fabriquée par le procédé de fabrication additive indirecte précédemment décrit a une dureté entre 34 et 44 HRC (dureté Rockwell C) ainsi qu'une taille de grain moyenne correspondant à l'ASTM N°5 ou plus fin (conformément aux exigences de la nome AMS 5917:2017), ce qui est permis par un déliantage complet évitant la précipitation de carbures ou d'oxydes aux joints de grains.

La figure 4 présente un procédé de déliantage selon un deuxième mode de réalisation. Sur cette figure, les éléments correspondant ou identiques à ceux du premier mode de réalisation recevront le même signe de référence, au chiffre des dizaine près, et ne seront pas décrits à nouveau.

Selon le deuxième mode de réalisation, le procédé de déliantage comprend un traitement thermique comprenant une rampe de température 42, d'un instant t0 à un instant t1, suivi immédiatement d'un traitement thermochimique comprenant un palier de température 44, de l'instant t1 à un instant t2. Le deuxième mode de réalisation diffère du premier en ce que le frittage de la pièce suit immédiatement le déliantage, optionnellement dans la même enceinte 28. A cet effet, au lieu de refroidir la pièce déliantée selon la rampe 36, un vide secondaire est fait dans l'enceinte 28 de l'instant t2 à un instant t3. Pendant cette durée, la pièce est maintenue à température selon un palier de température 46, par exemple à la même température que le palier de température 44 du traitement thermochimique, et en tout état de cause maintenue à des températures inférieures à la température de frittage Tf. Une fois le niveau de vide désiré atteint, repéré par l'instant t3, la température dans l'enceinte 28 peut être augmentée de façon à atteindre la température de frittage Tf sans jamais dépasser la température de liquidus de l'alliage (cas du frittage super-solidus), voire la température de solidus Ts de l'alliage, et ainsi fritter les particules de poudre. Le frittage peut ensuite être mis en œuvre par l'homme du métier selon ses connaissances.

Bien que la présente description se réfère à des exemples de réalisation spécifiques, des modifications peuvent être apportées à ces exemples sans sortir de la portée générale de l'invention. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Procédé de déliantage d'une pièce à vert (24) dans laquelle des particules de poudre sont maintenues ensemble par un composé polymère, le procédé comprenant un traitement thermique de la pièce à vert sous une atmosphère non-oxydante, et un traitement thermochimique de la pièce à vert sous une atmosphère oxydante pendant une durée inférieure ou égale à une durée prédéterminée, le traitement thermique et le traitement thermochimique étant effectués dans une même enceinte (28) et à des températures inférieures à la température de frittage (Tf) des particules de poudre, dans lequel le traitement thermique comprend l'application d'une température croissante à la pièce à vert, la vitesse de croissance de la température étant supérieure à 5°C/min.

2. Procédé de déliantage selon la revendication 1, dans lequel le traitement thermique précède le traitement thermochimique.

3. Procédé de déliantage selon la revendication 1 ou 2, dans lequel l'application d'une température croissante à la pièce à vert est effectuée selon une rampe (32, 42).

4. Procédé de déliantage selon l'une quelconque des revendications 1 à 3, dans lequel le traitement thermochimique comprend l'application d'un palier de température (34, 44) à la pièce à vert.

5. Procédé de déliantage selon l'une quelconque des revendications 1 à 4, dans lequel la température de fin du traitement thermique est inférieure ou égale à la température de début du traitement thermochimique.

6. Procédé de déliantage selon l'une quelconque des revendications 1 à 5, dans lequel l'atmosphère non-oxydante est une atmosphère d'argon ou d'argon hydrogéné ou de dihydrogène ou d'hélium ou un vide secondaire, et/ou l'atmosphère oxydante est une atmosphère d'air, par exemple d'air synthétique, et/ou l'atmosphère oxydante comprend un mélange d'oxygène avec un gaz neutre, et/ou dans lequel l'atmosphère non-oxydante est renouvelée au cours du traitement thermique et/ou dans lequel l'atmosphère oxydante est renouvelée au cours du traitement thermochimique.

7. Procédé de déliantage selon l'une quelconque des revendications 1 à 6, dans lequel la durée prédéterminée est inférieure ou égale à la durée du traitement thermique, et/ou dans lequel la durée cumulée du traitement thermique et du traitement thermochimique est inférieure ou égale à une heure.

8. Procédé de déliantage selon l'une quelconque des revendications 1 à 7, dans lequel le polymère est un polymère organique, par exemple thermoplastique ou thermodurcissable.

9. Procédé de déliantage selon l'une quelconque des revendications 1 à 8, dans lequel la durée prédéterminée est la durée la plus courte permettant de réduire le taux de carbone de la pièce déliantée, mesuré par spectrométrie de masse à plasma à couplage inductif, à une valeur inférieure à 1000 ppm, de préférence inférieure à 600 ppm, de préférence encore inférieure à 400 ppm, de préférence encore à 200 ppm.

10. Procédé de déliantage selon l'une quelconque des revendications 1 à 9, dans lequel la durée prédéterminée est définie de sorte que la teneur en oxygène acquise par la pièce déliantée pendant le procédé de déliantage, par rapport à la composition d'origine des particules de poudre, soit inférieure à 2800 ppm, de préférence à 2400 ppm, ladite teneur en oxygène provenant de la dégradation du composé polymère et de l'atmosphère oxydante.

11. Procédé de fabrication additive indirecte par projection de liant sur lit de poudre, comprenant l'obtention d'une pièce à vert (24) dans laquelle des particules de poudre sont maintenues ensemble par un composé polymère, le déliantage de la pièce à vert (24) par le procédé de déliantage selon l'une quelconque des revendications 1 à 10, et le frittage de la pièce déliantée, optionnellement dans lequel le frittage suit immédiatement le déliantage, de préférence dans la même enceinte (28).

12. Pièce (30) obtenue par le procédé de fabrication additive indirecte selon la revendication 11, dans laquelle la fraction massique d'oxygène mesurée par spectrométrie de masse à plasma à couplage inductif est inférieure à 0,41%, de préférence 0,35%, de préférence 0,1%, de préférence 0,06%, et/ou la fraction massique de carbone mesurée par spectrométrie de masse à plasma à couplage inductif est inférieure à 0,11%, de préférence 0,08%, et/ou la porosité est inférieure à 2%.
